# EUROPEAN PATENT APPLICATION

(11) **EP 3 151 258 A1**
(43) Date of publication of application: **05.04.2017**
(21) Application number: 15460090.2
(22) Date of filing: 30.09.2015
(51) Int. Cl.: H01G 4/32, H01G 4/01, H01G 4/18, H01G 4/224, H01G 4/008

(54) **GRAPHENE CAPACITOR, PARTICULARLY FOR AUDIO SYSTEMS, AND ITS USE**

(71) Applicant: Nawrocki, Piotr, 88-100 Inowroclaw (PL)
(72) Inventor: Nawrocki, Piotr, 88-100 Inowroclaw (PL)
(74) Representative: Sielewiesiuk, Jakub

(57) **Abstract**

The present invention is capacitor comprising two electric cladding elements (3) separated by a layer of electrically insulating polymer (1) in the form of wound tape arranged in a housing (4), wherein each of the electrical cladding (3) is electrically connected to the electrical connector (6, 7) led through the external casing (4), characterised in that the electrical cladding includes graphene layer (3a, 3b, 3c, 3d).

The invention also encompasses the use of such a capacitor as an element of electronic circuitry of the audio system.

## Description

### Technical Field

The present invention relates to a capacitor - an electrical circuit components, capable of collecting an electrical charge using the elements made of graphene, the use of which significantly reduces the electrical resistances and has positive influence on other characteristics of the operation manifested during use in electronic circuits of the type specified. The invention also relates to the use of capacitors according to the invention in electronic circuits for generating, receiving and processing acoustic signals.

### Background of the Invention

Capacitor commonly used in electronics, is a passive two-terminal - an electric element used to store electrostatic energy. Methods of capacitors vary widely, but will always contain at least two cladding elements (plates) separated by a dielectric (i.e., electrically insulating). Cladding can be thin films, films or sintered metal or conductive electrolyte spheres, and the like. The dielectric may be made of glass, ceramic, plastic, air, vacuum, paper, mica, oxide layers, etc.
An ideal capacitor gives no dissipation of energy (as opposed to a resistor), while its capacity is expressed as the ratio of electric charge Q on each cladding to a potential difference V between them. The capacity is greater when there is a smaller gap between the cladding and when it has a larger surface area. In practice, the dielectric between the plates passes a small amount of leakage current, as well as there is a limit of electric field, known as the breakdown voltage.
Capacitors are widely used as parts of electric circuits in many common electrical devices, and in electronic circuits they are used to block DC current flow while allowing AC.

Capacitors play an important role in the processing of acoustic signals, since they are used, for example, in a crossover design, i.e. circuitry used to divide the incoming audio signal as an electric signal to the corresponding bandwidth. The aim is to bring the appropriate signals of selected frequency ranges to further elements adapted to cooperate with the signals of the given frequency, e.g. in loudspeakers crossovers divide the signal between the low and high frequency speakers, etc. There are two types of crossovers: passive and active.

Passive crossovers built with the passive components of resistors, coils, capacitors, connected in a suitable system are the low-pass, high-pass or bandpass filters. Passive crossovers switched directly between the speaker output of the amplifier and speaker, and thus consist of components capable of operating at high power (relatively expensive and large dimensions). Sometimes to protect speakers (especially tweeters) in crossovers, resistors placed in series with the speaker limiting the power level supplied to it. The advantage of passive crossovers is their relatively simple construction and no need to bring external power supply to them. The disadvantage is the need for expensive, elements resistant to high capacities, mainly copper inductors. These features are the reason why passive crossovers are used in most domestic and studio loudspeakers.

Active crossovers are built with both the passive components of resistors, capacitors and active operational amplifiers. Active crossovers are switched between the sound source and amplifier, so they work with a low-voltage signal; thanks to their construction we can take advantage of cheaper, smaller resistors and capacitors. Through the use of operational amplifiers, active crossovers enable the creation of low-pass filter without using large and expensive inductors.
The advantage of active crossover is the ability to easily and accurately shape transfer characteristic, using low-cost components. The disadvantage is the need to supply additional power to the operational amplifiers. Active crossovers are mainly used in professional kits, for example, studio monitor speakers as well as Hi-End.

In the prior art several solutions concerning the use of graphene for the production of capacitors can be found. Document US 20140111906 A1 describes the construction of an electrolytic capacitor in which to form the dielectric layer graphene is used. The document CN 101894679 B describes the construction and method of manufacture of flexible super-capacitors, in which graphene is used as one of the materials to produce flexible electrodes. US 7623340 B1 describes a method for producing the nano-composite using graphene flakes and a bonding substance and a capacitor using such a material, wherein said material is now enabling electrolyte fluid in-flow. However, all these solutions do not have the characteristics that enable their use in electronic acoustic signal processing circuits. This makes it desirable to create a capacitor of a small size and weight that could be used in, among others, audio systems without compromising the quality of the audio being processed.

### Abstract

In order to minimise the possible opportunities for the operation of capacitors as propagation and receiving parts, i.e. resonant circuits receiving or generating sub- or super-acoustic, which can cause harmful oscillations, e.g. of the power amplifier, it is necessary to keep a greater distance between the speaker and power cables (low-current) . The problem often occurring with power amplifiers are the low-frequency acoustic currents, which occur most often when connected to the load of an inductive character, for example, speaker transformers in tube amplifiers SE, as well as in poorly designed transformers tube in push-pull amplifiers. Not only expensive audio amplifiers are equipped with active protection circuits speakers, as well as systems analysing interdependencies between inputs and outputs quickly correcting performance characteristics of the amplifier- de facto, in such a situation degradation of the audio signal information occurs.
Using the graphene capacitor in accordance with the invention we avoid these undesirable physical and electroacoustic phenomena inducing of various types of interference in nets of vacuum tubes, transistors gates databases and audio, as well as input circuits operational amplifiers. The use of capacitors constructed on the basis of graphene has a positive effect on the operation of individual degrees LF and significantly affects the quality and fidelity of sound reproduction by the system or audio device.

According to the invention, the capacitor comprising two electric cladding separated by a layer of electrically insulating polymer in the form of wound tapes arranged in a housing, where each of said electric cladding is electrically connected to the electrical connector led outside the housing, characterised in that the electrical cladding include a layer of graphene .
Preferably, said graphene layer is a layer of one of the following structures:
a. idiopathic graphene layer, in particular a two-dimensional layer or in the form of nanotubes,
b. graphene layer, in particular a two-dimensional layer or in the form of nanotubes embedded on the surface of a single polymer layer,
c. idiopathic doped graphene layer, in particular a two-dimensional layer or in the form of nanotubes,
d. doped graphene layer, in particular a two-dimensional layer or in the form of nanotubes embedded on the surface of a single polymer layer.

Preferably the polymer layer 2 is a polymer selected from the group consisting of polyethylene terephthalate (PET), polyethylene naphthalate (TEN), polyethersulfone (PES), and polycarbonate (PC), polypropylene (PP), poly(ethylene oxide) (PEO), poly(vinyl chloride) (PVC), synthetic rubber, polyethersulfone (PES), polycarbonate (PC).

Preferably, the capacitor is contained in a protective layer of electrical insulation with a very high resistance, particularly made of Teflon, alumina (Al₂O₃) or tantalum oxide (Ta₂O₅).

Preferably, the housing of the capacitor (4) is made of aluminium, poly(vinyl chloride) (PVC) or polypropylene (PP).
Preferably, the housing of the capacitor also is covered on the outside with plastic, in particular selected from: poly (vinyl chloride) (PVC), high density polyethylene (HDPE), low density polyethylene (LDPE), polypropylene (PP) or poly(ethylene terephthalate) (PET).
The invention also encompasses the use of such a capacitor as an element of electronic circuitry of the audio system.

The present invention relates to capacitors made of graphene which have the following characteristics:
- The vast flow velocity of electrons in the presented capacitor, about 1/300 the speed of light for the flow of electrons in the medium of graphene.
- Substantial indifference to ubiquitous electromagnetic energy interference with low and high field intensity at high frequencies.
- No formation of oscillations of a hum under the influence of electromagnetic energy at a frequency of 50 Hz and harmonics of high electromagnetic field intensity in an environment where they are located, such as: long power cables, transformers, power supply circuits, etc.
- Very low inductance and resistivity, and therefore, the said parameters minimally affect the sonic qualities of the audio systems working on graphene-based capacitor.
- Relatively low weight compared to the other capacitors currently on the market, constructed based on the conventional technologies.
- Lack of parasitic excitation to audio systems, and more of sub- than super-acoustic occurring compared to generally used capacitors built based on the technology based on materials other than graphene.
- Lack of additional electromagnetic screens, which often in addition to improving these properties and performance degrade them and generate unnecessary costs.
- Ability to work as a key element of an active filter system powering the analogue audio
- Ability to work as a key element of the electrical isolation of the supply voltage of analogue audio parts
- Can be used as coupling active degrees of LF
- Can be used as speaker crossover filters
- Can be used as DC component blocking capacitors occurring between degrees of audio reinforcement and load simultaneously transmitting variable component
Thanks to these features graphene capacitors may be implemented, for example, in laboratory measuring devices and used in speaker systems, providing clean detail, neutral, fully controlled sound reaching our consciousness, subconscious and superconscious.

Presented passive audio track component can be used in professional and commercial audio and video equipment. Presented capacitor is especially recommended to: acoustic devices or acoustic track designers, active and passive speaker crossover designers, and electroacousticians, sound engineers and producers, musicians, music lovers, audiophiles, and the like.

The capacitor can be used in microphone tracks, mixer elements, consoles, digital signal processors in systems such as a noise gate, filters, dynamics compressors, parametric EQ, limiters and other types of equipment used in audio technology. Wherever a coupling element and separating the amplifying stages, and the filters separating the audio signal frequency bands is necessary. It can also be a major element of the analogue audio active supply filter system , as well as the main element of the voltage electrical isolation system of the analogue audio. It may also have a role as a medium for connections: analogue, audio signals, mono and stereo.

### Brief Description of the Drawings

The invention will now be described in detail with reference to the drawings, in which:
*Fig.* 1 shows a model of a capacitor with graphene cladding,
*Fig.* 2 shows a cross-sectional view of the capacitor structure with graphene cladding,
   *Fig.* shows the physical form of the graphene capacitor.

Moreover, the figure uses the following indications: 1 - a layer of electrically insulating polymer; 2 - electrical insulation; 3 - capacitor cladding including graphene (its particular forms were designated by 3a, 3b, 3c, 3d); 4 - housing; 5 - plastic; 6.7 - electrical connectors.

### Detailed Description of the Invention

The invention relates to a graphene capacitor coupling isolating and/or separating an acoustic signal.

Capacitor for audio applications is an extremely important element of passive acoustic track performing several important functions in the system of acoustic track. In electro-acoustic circuits and systems it often gives the undesirable nature to the sound of music programmes, music, and has unfortunately very significant impact on the clarity of the sound of musical instruments and speech. The use of poor quality capacitors clearly breaks or degrades readability, colour, understanding and sound quality. Acoustic track capacitors, together with a number of elements of the acoustic track, undoubtedly form the type of transmission medium for acoustic waves the whole spectrum of the sound spectrum connecting the sound source, preamplifier and amplifier. They are even present in passive and active speakers. Audio capacitors are designed for example to allow the passage of small amplitude signals and large amplitude signals to and from the audio amplifier while blocking the DC component in the various levels of circuit design of small and large capacities. Therefore, their quality is extremely important if we want fidelity and quality of sound reproduction fed from the source to the amplifier, or for understanding, and correct reading the information contained in the audio signal. At the same time the quality of the capacitors within the eclectic parameters influences the static operating conditions, that is, the operating point of the active elements. Capacitors are mainly characterised by capacity and breakdown voltage insulation. The size of the capacitor and its weight is closely related to these parameters - the higher capacity and limit voltage of the capacitor work to which the capacitor must block the said voltage its overall dimensions increase. Normally it is not allowed that said safe work voltage of the capacitor was equal to the voltage we want to block. If the capacitor works only in the AC and voltage system, usually the limit alternating voltage can be approx. 40% higher than a constant limit voltage. As everyone knows each passive component of an acoustic track is an unwanted element, so it is best if there are no capacitors in the audio track. Indeed, in the high-end audio equipment structures in which the capacitors in the sound track are almost gone are designed. Therefore, it is very difficult to achieve 100%, the capacitors in the audio track typically must be present.

Besides the ones mentioned earlier, an important capacitor parameter is resistivity connected with the surface of the cladding. The greater the surface the less resistance to the signal which is favourable for direct impact on the power fed back into the speakers. Such a capacitor also has a lower leakage; the larger it is the more influence it has on the deterioration of the separation of the permanent component between these levels.
In addition, the lower resistivity of a capacitor cladding, the lower the energy dissipated in the capacitor, therefore a smaller amount of heat is released during element operation - this is important in the capacitor operation for the varying component of large amplitude. So using a capacitor with a larger cross-section is more favourable, making more energy sources reach the speaker unit - it is important information directly relating to users of audiophile tube power amplifiers in configuration SE/Single End/whose output is approx. 8W, for amplifiers built on tubes, for example 300B, 2A3 and similar or transistor amplifiers working in the class A. with an output power not usually exceeding approx. 15W.
Similar expectations apply to the capacitors connecting a turntable and a preamplifier, but in this case we do not use and do not have high power of the transmitted signal more resistant to external interference. On the contrary, in this case we are dealing with small signals, where very high resistance is important and their susceptibility to interference reaching and besieging the capacitors from the outside negligible. When strengthening this type of signals minimal own medium noise and temperature stability (drift) are necessary and indeed indispensable. Unwanted own characteristics, though characteristic of each medium, will always be present, i.e. parasite capacitance, inductance, resistivity, which have a direct impact on the spectrum and audio quality, or the quality of information, which is reinforced in subsequent stages audio system can affect the information. As previously mentioned - low-quality capacitors could mislead.

In the proposed solution, there is no need to use relatively large and heavy capacitors if without any loss of sonic values better, thinner, lighter, faster capacitors can be used. Using the graphene capacitor eliminates other problems with audio devices in the case of employing a capacitor built based on the graphene technology in comparison with technology based, for example, on copper hardly occur, i.e. oscillation of parasitic super-acoustic capacity, observable on the oscilloscope - the sign of which is usually unjustified heating of the amplifier heat sink, even with minimal input signal, and even in its absence due to the nature of the medium (inductance, parasitic capacitance, internal resistance, resonance of high frequency voltages).

You can easily prevent any possible oscillations of a hum impact of SEM (strength of electromagnetic energy at a frequency of 50Hz harmonics and sub harmonics) high-field inducing the poor quality capacitors. Oscillations can cause hyperactivity of the protection circuitry, resulting in malfunction of the amplifier. In the case of the use of the presented graphene capacitor active audio tracks can be minimized, so low pass filters in the amplifier degrading sound, bindings (twisting) of the conventional speaker cables brought out of the power amplifier or can be dispensed with. This can affect the appearance of parasitic capacitance and lowering the frequency response of audio bandwidth thereby worsening the quality of sound reproduction and the capacitor speed.

It is well known that every element of the acoustic and design of the preamplifiers, amplifiers, transmission lines has an effect on the nature of sound quality produced by the power amplifier, and consequently speaker units with the turnouts. The type and quality of the components used to build audio transmission paths connecting the particular microphone preamplifiers, CD and DVD drives with power amplifiers and speaker systems have significant and not contestable influence on the character and quality of sound creation. In a situation where we use the capacitor presented one has the impression that the character of the sound is created only by active elements. The transmission line - the presence of media on the basis of graphene capacitors in terms of acoustics is not felt. Transmission, reproduction and creation of sound occur by means of active audio track. We achieve the desired effect of "exclusion" of capacitors in the audio path that in fact are physically there.

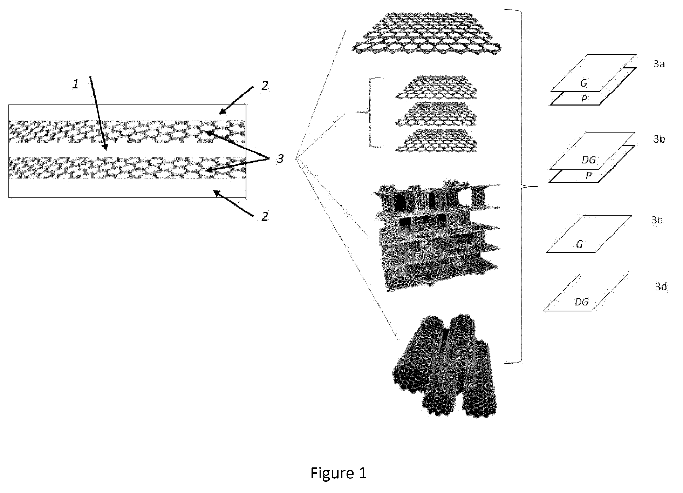

The present capacitor is preferably made of a layer of graphene (3a, 3b, 3c and/or 3d) arranged in the polymer layer (1), which acts as a high-quality insulator which is not a carrier of information. Transmission medium is graphene that acts as a capacitor cladding (3) which electrodes (6, 7) are galvanically fixed to. Model capacitor with graphene cladding is shown in Fig. 1.
The flexible material of the capacitor (Fig. 1) - is preferably a material having a structure composed of one, two or more components with different properties. The properties of the composites are not the sum or average of the properties of its components, and the material used in its construction exhibits anisotropy of physical properties.

One component is preferably a binder, in this case, any polymer (1), which can further guarantee the consistency and elasticity of the membrane, and the other is a layer of graphene (3a, 3b, 3c and/or 3d), which satisfies the basic properties of the capacitor cladding (3).

The components of the capacitor cladding (3) should preferably be made in one of the following ways:
- intrinsic graphene layer (3c) (two-dimensional or of structure, e.g. nanotubes)
- a layer of graphene (3a) (two-dimensional or of nanotubes structure)"embedded" on the surface of a single layer of polymer,
- intrinsic graphene doped layer (3d) (two-dimensional or of nanotubes structure)
- a doped layer of graphene (3b) (two-dimensional or of nanotubes structure)"embedded" on the surface of a single layer of polymer,

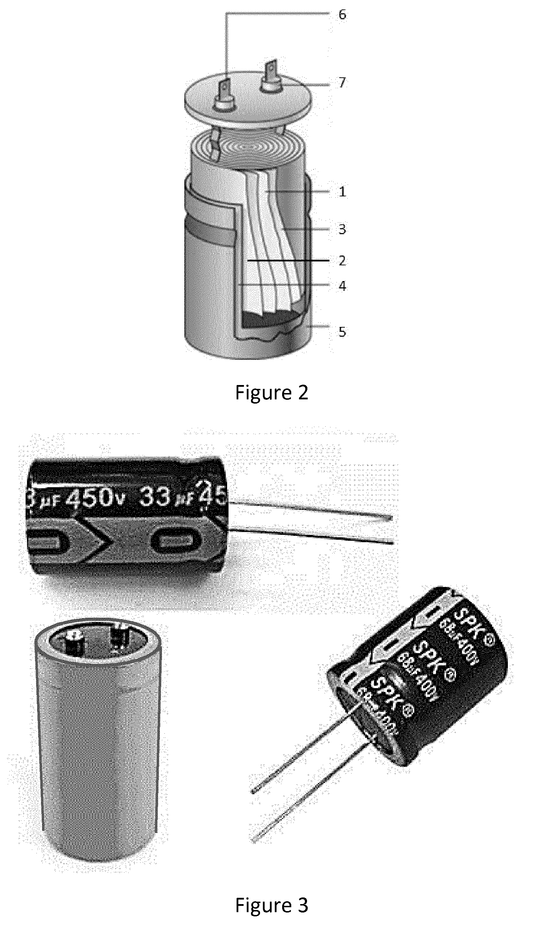

The said polymer layer (1) is a polymer selected from the group consisting of polyethylene terephthalate (PET), polyethylene naphthalate (TEN), polyethersulfone (PES), and polycarbonate (PC), polypropylene (PP), poly(ethylene oxide) (PEO), poly(vinyl chloride) (PVC), synthetic rubber, most preferably: polyethersulfone (PES), polycarbonate (PC), which ensure its integrity, hardness, flexibility, resistance to compression. Graphene layer provides a very good conductive properties while maintaining the transparency of the material.
Capacitors are preferably sealed in a protective layer of Teflon insulation (2) with a very high resistance, which is so very electrically neutral, that does not affect the nature of the information transmitted by the capacitor.
Graphene layer (3a, 3b, 3c and/or 3d) is preferably uniform and forms a surface characterised by a uniform level of electro-acoustic-wave propagation, which is audio signal composed in many ways. Since graphene has a one-dimensional (homogeneous) structure, electrons move in one plane in a controlled manner (as free electrons) either forward or backward (while e.g. in copper-free electrons move chaotically and in a disordered way in a multidimensional structure). Capacitors built with graphene provide high level of electroacoustic properties, which is a transmission material of almost perfect characteristics. Reference signal, in this case from the source which is a turntable, a preamplifier, a power amplifier, and the like, regarded as the input signal has minimal loss of signal strength, short propagation time, transferring in a short unit of time of electric power between the stages of low-frequency to a load that the other amplification stages or speaker crossovers, passive filters loaded with little resistance for low noise of their own are. The input signal is almost identical to the reference signal source. Presented element is characterised by significant indifference to induction of a spurious HF (high frequency energy) electromagnetic energy that passes through the presented capacitor in different areas, it also has a resistance to RFI (Radio Frequency Interference) and EMI (Electro Magnetic Interference), which results with minimum parasitic inductance of the electrical structure of graphene. Moreover, the present passive audio track component meets the requirements for electro-mechanical strength, such as mechanical resonance, thermal stability, high accuracy and stability of represented capacity. The physical form of the capacitor built on the basis of graphene is shown in Fig. 2. The physical form of the capacitor built on the basis of graphene is shown in Fig. 3.

## Claims

1. A capacitor comprising two electric cladding elements (3) separated by a layer of electrically insulating polymer (1) in the form of wound tape arranged in a housing (4), wherein each of the electrical cladding (3) is electrically connected to the electrical connector (6, 7) led through the external casing (4), **characterised in that** the electrical cladding includes graphene layer (3a, 3b, 3c, 3d).

2. The capacitor according to claim 1, **characterised in that** said graphene layer is a layer of one of the following structures:
a. idiopathic graphene layer (3c), in particular a two-dimensional layer or in the form of nanotubes,
b. graphene layer (3a), in particular a two-dimensional layer or in the form of nanotubes embedded on the surface of a single polymer layer,
c. idiopathic doped graphene layer (3d), in particular a two-dimensional layer or in the form of nanotubes,
d. doped graphene layer (3b), in particular a two-dimensional layer or in the form of nanotubes embedded on the surface of a single polymer layer.

3. The capacitor according to claim 1 or 2, **characterised in that** the polymer layer (1) is a polymer selected from the group consisting of polyethylene terephthalate (PET), polyethylene naphthalate (TEN), polyethersulfone (PES), and polycarbonate (PC), polypropylene (PP), poly(ethylene oxide) (PEO), poly(vinyl chloride) (PVC), synthetic rubber, polyethersulfone (PES), polycarbonate (PC).

4. The capacitor according to claim 1, 2 or 3, **characterised in that** the capacitor is contained in a protective layer of electrical insulation (2) with a very high resistance, particularly made of Teflon, alumina (Al₂O₃) or tantalum oxide (Ta₂O₅).

5. The capacitor according to claim 1, 2, 3 or 4, **characterised in that** the housing of the capacitor (4) is made of aluminium, poly(vinyl chloride) (PVC) or polypropylene (PP).

6. The capacitor according to any one of claims 1 to 5, **characterised in that** the housing of the capacitor also is covered on the outside with plastic (5), in particular selected from: poly (vinyl chloride) (PVC), high density polyethylene (HDPE), low density polyethylene (LDPE), polypropylene (PP) or poly(ethylene terephthalate) (PET).

7. Use of the capacitor claimed in any one of claims 1 to 6 as part of the electronic circuitry of the audio system.
